(19) Europäisches Patentamt
European Patent Office
Office européen des brevets

(11) Veröffentlichungsnummer : **0 359 767 B1**

(12) # EUROPÄISCHE PATENTSCHRIFT

(45) Veröffentlichungstag der Patentschrift : **09.10.91 Patentblatt 91/41**

(51) Int. Cl.$^5$ : **G01V 3/08**

(21) Anmeldenummer : **88904446.7**

(22) Anmeldetag : **25.05.88**

(86) Internationale Anmeldenummer : **PCT/AT88/00036**

(87) Internationale Veröffentlichungsnummer : **WO 88/09515 01.12.88 Gazette 88/26**

(54) **ORTUNGSVERFAHREN ZUR STANDORTBESTIMMUNG UNBEKANNTER EMPFANGS- BZW. SENDERPOSITIONEN.**

(30) Priorität : **25.05.87 AT 1326/87**

(43) Veröffentlichungstag der Anmeldung : **28.03.90 Patentblatt 90/13**

(45) Bekanntmachung des Hinweises auf die Patenterteilung : **09.10.91 Patentblatt 91/41**

(84) Benannte Vertragsstaaten : **AT DE FR GB SE**

(56) Entgegenhaltungen :
**EP-A- 0 087 168**
**AT-A- 374 595**

(56) Entgegenhaltungen :
**IEEE Transactions on Geoscience and Remote Sensing, Vol. GE-19, Nr. 4, October 1981 (New York, US); F.H. Raab: "Quasi-static magnetic-field technique for determining position and orientation", pages 235-243**

(73) Patentinhaber : **NESSLER, Norbert**
**Botanikerstrasse 16A**
**A-6020 Innsbruck (AT)**

(72) Erfinder : **NESSLER, Norbert**
**Botanikerstrasse 16A**
**A-6020 Innsbruck (AT)**

(74) Vertreter : **Hofinger, Engelbert et al**
**Torggler-Hofinger Wilhelm-Greil-Strasse 16**
**A-6020 Innsbruck (AT)**

**EP 0 359 767 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Ortungsverfahren zur Standortbestimmung von Empfangsantennen mittels elektromagnetischer NF-Signale im Nahfeldbereich einer ortsfesten Sendevorrichtung. Weiters betrifft die Erfindung ein Ortungsverfahren zur Standortbestimmung einer beliebig orientierten und beliebig positionierten Dipolantenne mittels elektromagnetischer NF-Signale im Nahfeld.

Zur Ortung eingeschlossener Bergleute oder zur Lokalisierung fehlgegangener Bohrlöcher werden magnetische Sendeantennen, gespeist mit niederfrequenten Wechselstrom als Quelle an dem zu ortenden Standpunkt verwendet. Es sind Verfahren bekannt, mit deren Hilfe aus der Messung des vom Sender erzeugten Feldes an mehreren Stellen, z.B. von der Erdoberfläche aus, auf die Position des Senders geschlossen werden kann.

In AT-PS 374 595 wird z.B. eine Methode angegeben, mit deren Hilfe eine beliebig orientierte Sendeantenne durch Messung der Feldrichtung in auch unter Tage gelegenen punkten geortet werden kann.

Die Druckschrift EP-A-87 168 beschreibt ein Ortungssystem zur Ortung eines magnetischen Sende-Dipols in dessen Nahfeld, wobei an zwei beabstandeten Meßpunkten jeweils die Maximalamplitude des Feldes gemessen wird. Daraus wird näherungsweise auf den Abstand des Senders von den beiden Meßpunkten und schließlich auf den Standort des Senders geschlossen. Nachteilig ist bei dieser reinen Amplitudenmessung, daß die Senderstärke genauestens bekannt sein muß und bei der Ermittlung des Abstandes aus den Amplituden die Richtungsabhängigkeit des Dipolfeldes nur näherungsweise eingeht.

Allen Ortungsmethoden ist gemeinsam, daß vor der eigentlichen Ortung die Position und Orientierung der Empfangsantenne(n) in den Meßpunkten bekannt sein muß. Die genaue Ortsbestimmung für Empfangspunkte unter Tage kann sehr zeitraubend und aufwendig sein, weiters ist die Ermittlung der Orientierung der Empfangsantenne in der Horizontalen, z.B. durch Kompaßmessung störungsanfällig, denn Schienen und eiserne Rohrleitungen verändern das Erdmagnetfeld und können zu unzulässigen Meßfehlern führen.

In den US-PS 3 868 565 und 3 983 474 wird ein Nachführungssystem mittels eines nutierenden Senderfeldes zur Ortsbestimmung eines Empfängersystems beschrieben. In US-PS 4 054 881 wird eine Ortungsmethode angegeben, wobei ein an der Oberfläche befindlicher dreiachsiger Sender in Phasenrelation zueinander stehende Signale verschiedener Frequenz aussendet, die in einem dreiachsigen Empfänger aufgeteilt nach Frequenz und Phase gemessen werden, woraus eine Koordinateninformation gerechnet wird.

Bei keiner der bisher bekannten Verfahren ist eine Bestimmung der unter Tage gelegenen Empfängerpositionen durch Messungen mit einer für die Ortung einfacher Dipolsender geeigneten Empfangsvorrichtung selbst möglich.

Eine Aufgabe der Erfindung besteht darin, ein genaues und rasch durchzuführendes Verfahren zur Standportbestimmung von Empfangsantennen anzugeben.

Dies wird erfindungsgemäß dadurch erreicht, daß die Sendevorrichtung aus einer oder mehreren magnetischen Dipolantennen besteht und daß mittels der ortsfesten Sendevorrichtung Dipolfelder in verschiedenen Achsenrichtungen erzeugt werden und mittels einer Empfangsvorrichtung unbekannter Position und unbekannter Orientierung die Feldstärke und die Feldrichtung bezüglich des Empfängersystems für jede Sendeorientierung gemessen wird, woraus gemäß dem Zusammenhang

$$r(\varphi) = \frac{Ce}{\sqrt[3]{H_j \cdot \sqrt{(1 + 3\sin^2(\varphi - \alpha_j))}}}$$

mit

r( $\phi$ ) ... Ortskurve der möglichen Senderstandorte in Polarkoordinaten des Empfängersystems bei der j-ten Senderorientierung,

Ce ... Maßstabsfaktor,

Hj ... Empfangsfeldstärke bei der j-ten Senderorientierung,

$\alpha$j ... Feldrichtung relativ zum Empfängersystem bei der j-ten Senderorientierung

im zwerdimensionalen, ebenen Fall, bei dem die einzelnen Empfangspositionen der Empfangsvorrichtung und die Achsenrichtungen der Sendeantennenstellungen in derselben Ebene liegen - je eine Ortskurve (k) bzw. - im allgemeinen dreidimensionalen Fall - eine daraus durch Rotation um den gemessenen Feldstärkenvektor hervorgehende Ortsfläche jener möglicher Senderstandorte berechnet wird, die bei der Empfangsvorrichtung die Feldstärke (Hj) in der Feldrichtung ($\alpha$j)erzeugen, wobei die gemeinsamen Schnittpunkte von mindestens drei Ortskurven (k, K2, K3) bzw. mindestens vier Ortsflächen ein Lösungspaar von zwei diametral gegenüberliegenden Senderpositionen (SA) und (SA') ergeben, woraus die relativen Koordinaten des Empfängerstandortes (EA) bezüglich des Senderstandortes ermittelt werden.

Das erfindungsgemäße Verfahren zur Bestimmung des Empfängerstandortes basiert auf der Verwendung einer Sendervorrichtung (Hilfssender) mit bekannter fixer Position vorzüglich innerhalb des Bergwerks, wobei die Richtung der Senderachse (Achse des Sendedipols), d.h. die Senderorientierung, durch geeignete Maßnahmen im allgemeinen räumlichen Fall in vier Raumrichtungen, im Fall einer angenähert ebenen Meßanordnung in drei verschiedene, in einer Ebene liegende Richtungen, z.B. 0, 120 und 240 Grad eingestellt werden kann. Eine angenähert ebene Meßanordnung liegt vor, wenn alle Empfangsantennen und die Achsenrichtungen der Sendeantennenstellungen angenähert in einer Ebene Liegen. Diese Situation tritt in Bergwerken häufig auf.

Für jede Senderachseinstellung wird am Empfangsort das Feld nach Betrag und Richtung gemessen. Aus diesen Meßdaten ist erfindungsgemäß eine Berechnung der Empfängerposition und Empfängerorientierung relativ zum Sender möglich.

Es ist günstig, aber erfindungsgemäß nich zwingend notwendig, daß die Sendefrequenz des Senders dabei in dem gleichen Frequenzbereich liegt wie die zur eigentlichen Ortung verwendete Frequenz, so daß die gleiche Empfanngseinrichtung verwendet werden kann. Die Sendefrequenz des Senders ist natürlich so zu wählen, daß unter Berücksichtigung der Leitfähigkeit des umgebenden Gesteins und der zu erwartenden Meßentfernung der dämpfende Einfluß des Gesteins vernachlässigbar ist. Die erfindungsgemäße Lokalisierung des Empfängerstandortes beruht auf der weitgehend ungestörten Ausbreitung des Senderfeldes, im weiteren als "Nahfeld" -Bereich bezeichnet.

Als Sender werden eine oder mehrere als Sendedipol wirkende Spulen- oder Rahmenantennen verwendet. Bei Verwendung nur einer Sendeantenne muß diese in die erforderlichen Richtungen schwenkbar sein. Bei Verwendung mehrerer feststehender Sendeantennen sind diese so anzuordnen, daß je eine Senderdipolachse in die zur Ortsbestimmung erforderlichen Richtungen weist. Weiters ist eine Anordnung von gekreuzten Sendeantennen möglich, von denen jede mit einer solchen Amplitude und Phasenlage bei gleicher Frequenz gespeist wird, daß das resultierende Dipolmoment in die gewünschte Richtung weist.

Für den angenähert ebenen Anwendungsfall ergibt sich die günstigste und technisch einfachste Konfiguration für den Sender durch die Verwendung von nur zwei gleichartigen Sendeantennen, deren Achsenrichtung um 120 Grad gegeneinander versetzt ist. Zur weiteren Erklärung wird die Richtung der ersten Sendeantenne mit "0 Grad", die der zweiten mit "120 Grad" bezeichnet. Die drei erforderlichen, in einer Ebene liegenden Senderachsenrichtungen werden dadurch realisiert, daß zunächst je eine der zwei erstgenannten Sendeantennen allein verwendet wird und damit die Senderrichtungen 0 Grad und 120 Grad dargestellt werden. Für die dritte Senderrichtung werden dann beide erstgenannten Sendeantennen gleichzeitig und phasengleich mit je einer solchen Stromstärke gespeist, wie vorher für jede einzelne Sendeantenne verwendet wurde. Die resultierende Wirkung ergibt sich aus der Vektoraddition der beiden Einzeldipole und entspricht in Stärke und Form der Senderachsenrichtung 60 Grad, was aus Symmetriegründen gleichbedeutend mit 240 Grad ist.

Weiters muß erfindungsgemäß für mindestens eine der im Sendersystem verwendeten Dipolrichtungen deren "aktiver" Zustand dem Empfänger mitgeteilt werden, um eine Referenz für die Winkelzählung zu erhalten. Dies kann z.B. durch entsprechende Codierung oder durch unterschiedliche Sendefrequenzen erreicht werden.

Als Empfänger dient entweder eine auf einem Peilkopf in alle Raumrichtungen schwenkbaren Rahmen-, Spulen- oder Ferritstabantenne oder ein Empfangsantennensystem, welches aus drei orthogonal aufeinander stehenden Empfangsantennen besteht, um bei entsprechender Orientierung des Empfangssystems die X-, Y- und Z-Komponente des Feldes im Empfangspunkt zu messen. Aus diesen Komponenten werden nach bekannter Methode die Stärke und Richtung des Feldes berechnet.

Für die Koordinatenberechnung und die Winkelzählung ist zwischen dem auf den Senderstandort und die Senderorientierung und dem auf den Empfängerstandort und die Orientierung des Empfängersystems bezogenen Koordinatensystem zu unterscheiden, im weiteren wird ersteres kurz "Sendersystem", letzteres kurz "Empfängersystem" genannt.

Eine weitere Aufgabe der Erfindung besteht darin, ein genaues und rasch durchzuführendes Verfahren zur Ortung eines räumlich feststehenden, in Ort und Orientierung unbekannten Sendedipols anzugeben.

Die der Erfindung zugrundeliegende Idee, im Empfänger-system zunächst die Ortsfläche bzw. Ortskurve jener möglichen Senderpositionen zu ermitteln, die dem gemessenen Feld beim Empfänger entsprechen, und letztlich aus mehreren solcher Ortsflächen bzw. Ortskurven auf die Relativlage zwischen Sender und Empfänger zu schließen, läßt sich nicht nur auf die Lagebestimmung der Empfangsantennen, sondern in analoger Weise auch auf die Ortung eines räumlich feststehenden, in Lage und Orientierung unbekannten Sendedipols anwenden, wenn anstelle der verschiedenen, bekannten Senderorientierungen zur Standortbestimmung einer Empfangsvorrichtung verschiedenen, bekannte Empfangsvorrichtungspositionen zur Stansdortbestimmung des einen unbekannten Sendedipols treten.

Es ist dazu erfindungsgemäß vorgesehen, daß das von dieser Dipolantenne erzeugte Feld in mindestens

drei, vorzugsweise mindestens vier geeignet gewählten lagenmäßig bekannten Empfangspunkten nach Stärke und Richtung gemessen wird, woraus im Empfängersystem für jeden Meßpunkt eine durch Rotation der Ortskurve r (ϕ)

$$r(\varphi) = \frac{Ce}{\sqrt[3]{H_j \cdot \sqrt{(1 + 3\sin^2(\varphi - \alpha_j))}}}$$

mit

r( ϕ ) ... Ortskurve der möglichen Senderpositionen in Polarkoordinaten des Empfängersystems im j-ten Meßpunkt,

Ce ... Maßstabsfaktor,

Hj ... Feldstärke im j-ten Meßpunkt,

αj ... Feldrichtung relativ zum Empfängersystem im j-ten Meßpunkt,

um den gemessenen Feldstärkenvektor hervorgehende Ortsfläche möglicher Senderstandpositionen berechnet und aus dem (den) Schnittpunkt(en) der zu den einzelnen Empfangspunkten gehörigen Ortsflächen der Senderstandort ermittelt wird.

Zur Festlegung der Lagen der Empfängerantennen kann das oben beschriebene erfindungsgemäße Verfahren verwendet werden. Man braucht dabei nur eine einzige, mit einer Speichereinrichtung ausgestattete Empfangsvorrichtung zu verwenden, wobei an jeder von beispielsweise drei Positionen sowohl das Feld des bekannten Hilfssenders als auch das Feld des gesuchten Sendedipols gemessen und aufgezeichnet wird. Aus den aufgezeichneten Daten des Hilfssenders lassen sich die Relativlagen der Empfängerpositionen untereinander und zum bekannten Hilfssender ermitteln. Aus den nun bekannten Empfängerpositionen und den aufgezeichneten Daten des gesuchten Sendedipols läßt sich dann der Ort und die Stellung dieses Sendedipols relativ zu einem Empfänger ermitteln. Zu erwähnen ist noch, däß das erfindungsgemäße Verfahren zur Standortbestimmung von Empfangsantennen und das im folgenden näher erläuterte, auf derselben Idee basierende Verfahren zur Ortung eines Sendedipols auch getrennt voneinander eingesetzt werden können.

Zur Ortung des unbekannten Sendedipols wird an verschiedenen Meßpunkten das Feld in Betrag und Richtung gemessen und im Empfängersystem jeweils die Ortsflache jener mögglichen Sendepositionen ermittelt, die ein dem gemessenen Feld entsprechendes Feld beim Empfänger hervorrufen. Aus dem bzw. den Schnittpunkten der einzelnen Ortskurven läßt sich dann die Relativlage des gesuchten Senders relativ zum Empfängersystem ermitteln.

Zunächst wird der vereinfachte zweidimensionale Fall beschriebene, d.h. es wird angenommen, daß alle Empfangspunke und die Achsenrichtungen der Sendeantennenstellungen in derselben Ebene, im weiteren "Bezugsebene" genannt, liegen. Dem häufigsten Anwendungsfall entsprechend wird für die weitere Beschreibung diese Ebene als waagrecht liegend angenommen, w s aber keine Einschränkung der Allgemeinheit bedeutet.

Die Erfindung wird im folgenden anhand von Ausführungsbeispielen durch die Figuren näher erläutert.

Fig. 1 stellt den Verlauf der Feldlinien f eines magnetischen Dipols SA in einer beliebigen Meridianebene im ungestörten Nahfeld dar. EA stellt eine auf maximale Empfangsspannung ausgerichtete Empfangsantenne dar, die mit dem Radiusvektor r den Winkel ϕ einschließt.

Fig. 2 zeigt in einem auf den Empfängerstandort EA bezogenen Koordinatensystem die Ortskurve k aller möglichen Senderpositionen SA, welche am Empfangsort EA eine Feldstärke vom Betrag H in der Richtung α erzeugen.

Fig. 3 zeigt zwei Ortskurven k und k2 analog zu Fig. 2 und einen der vier als Schnittpunkte von k und k2 errechneten Senderstandorte SA.

Fig. 4 stellt drei Ortskurven k, k2 und k3 analog zu Fig. 2 dar, deren gemeinsame Schnittpunkte das Lösungspaar für die Senderstandorte SA und SA' bestimmen.

Fig. 5 gibt eine Aufrißdarstellung für die Meßsituation wieder, bei der die Sendeantenne in der durch SA gekennzeichneten waagrechten Bezugsebene liegt und der Empfängerstandort einen Abstand z von der Bezugsebene hat.

Fig. 6 zeigt die Schnittlinien der Ortsflächen der möglichen Senderstandorte eines zu ortenden Senders mit einer die drei Meßpunkte enthaltenden Bezugsebene.

Die Feldstärke H einer als magnetischer Dipol wirkenden Sendeantenne läßt sich im ungestörten Nahfeld in bekannter Weise berechnen und ergibt sich in Polarkoordinaten zu

$$H = m/4\pi \,.\, 1/r^3 \,.\, \sqrt{1 + 3.\cos^2\theta} \quad (1)$$

mit m = n.I.F ... magnetisches Dipolmoment

Die Feldverteilung eines Dipols, in bekannter Weise repräsentiert durch Feldlinien f, ist in Fig. 1 im "Sendersystem" dargestellt und hat folgende für das erfindungsgemäße Verfahren wesentliche Eigenschaften:

1.) Alle Feldlinien f verlaufen Meridianebenen, das sind Ebenen, welche die Achse a des Sendedipols SA enthalten.

2.) Der Schnittwinkel $\phi$ der Feldlinien mit ein und derselben Radiusrichtung r ist konstant und unabhängig von der Länge des Radiusvektors, jedoch gemäß Gleichung 2 abhängig vom Winkel $\theta$ zwischen Radiusvektor und Dipolachse.

$$\tan\theta = 2 . \tan\phi \quad (2)$$

mit

$\theta$ ...Winkel zwischen Radiusvektor uni senderachse (Winkel im Sendersystem)

$\phi$ ... Winkel zwischen Radiusvektor und Feldlinie (Winkel im Empfängersystem)

Das neue Verfahren sieht die Berechnung der Senderposition SA (in Fig. 2 dargestellt im Empfängersystem) aus der gemessenen Feldstärke H und der Feldrichtung $\alpha$ am Empfängerstandort EA vor, wobei der Winkel $\alpha$ von der zunächst beliebig orientierten X-Achse des Empfängersystems gezählt wird.

Zur Bestimmung der Ortskurve aller möglichen Senderpositionen, welche im Empfangspunkt EA die Feldstärke H in der Richtung $\alpha$ erzeugt, wird Gleichung (1) nach r aufgelöst und die Winkelzählung von $\theta$ (im Sendersystem) auf den Polarwinkel $\phi$ (im Empfängersystem) analog zur Gleichung 2 umgerechnet:

$$r(\varphi) = \frac{Ce}{\sqrt[3]{H \; . \; \sqrt{(1+3.\sin^2(\varphi-\alpha))}}} \quad (3)$$

mit

Ce ... Maßstabsfaktor, enthält Dipolstärke des Senders und Eichfaktor der Empfangsantenne.

In Fig. 2 ist diese Ortskurve k im Empfängersystem dargestellt, SA repräsentiert eine mögliche Senderstellung.

Wird für eine zweite Senderstellung am gleichen Emfpangsort die Feldstärke H2 und die Feldrichtung $\alpha$ 2 gemessen, so ergibt sich eine neue Ortskurve k2, die durch eine zu Gleichung 3 analoge Gleichung 3a beschrieben wird.

$$r(\varphi) = \frac{Ce}{\sqrt[3]{H2. \; \sqrt{(1+3.\sin^2(\varphi-\alpha 2))}}} \quad (3a)$$

Die beiden Ortskurven k und k2 sind in Fig. 3 eingezeichnet und schneiden sich im allgemeinen in vier Punkten. Der Winkelparameter $\phi$ für einen Schnittpunkt und die zugehörige Entfernung r zwischen Sender und Empfänger lassen sich analytisch nach bekannten Methoden aus den Gleichungen 3 und 3a berechnen. Der Maßstabsfaktor Ce zur Berechnung von r wird dazu als bekannt vorausgesetzt oder durch eine Eichmessung bei bekannter Entfernung und Winkelstellung bestimmt.

Bei ungünstiger Lage der Empfangspunkte bezüglich der zwei Senderstellungen, erkennbar durch ein Verhältnis der Feldstärken H und H2 von nahe 2, ergeben sich unterschiedlich große Ortskurven und folglich schleifende Schnitte. Kleine Meßfehler in der Feldstärke H, H2 oder in der Feldrichtung $\alpha$, $\alpha$2 wirken sich stark vergrößert auf das Ergebnis $\phi$ und r aus.

Zur Reduzierung der Lösungsmannigfaltigkeit wird die Felmessung mit einer dritten Senderachsenrichtung durchgeführt. Diese Messung liefert ein drittes Paar von Feldstärke und Feldrichtung und bestimmt damit eine dritte Ortskurve k3 (Fig. 4) mit jeweils vier Schnittpunken mit den Ortskurven k und k2. Durch die symmetrische Anordnung der Senderachsenrichtung gibt es für jeden beliebigen Empfängerstandort stets zwei Ortskurven, deren zugehörige Feldstärkewerte etwa gleich groß sind, wodurch die Berechnung mit schleifenden Schnitten vermieden wird. Die dritte Ortskurve dient der Einschränkung der Lösungsmannigfaltigkeit: Genau zwei dem Empfängerstandort diametral gegenüberliegende Schnittpunkte sind allen Ortskurven gemeinsam und damit mögliche Senderstandorte SA und SA'.

Die Bestimmung der physikalisch richtigen Lösung erfolgt, falls nich durch andere Maßnahmen eine eindeutige Lösung gefungen werden kann, mittels einer Amplitudendifferenzmessung. Wegen der $1/r^3$-Abhängigkeit der Feldstärkte (Gleichung 1) ergibt bereits eine geringe Verschiebung des Empfangspunktes in Richtung zum Sender eine deutliche Feldstärkezunahme und somit ein Entscheidungsmerkmal zwischen den Lösungen

SA und SA'.

Die relativen Ortskoordinaten zwischen Sender- und Emfpfängersystem sowie die Orientierung des Empfänfgersystems bezüglich des Sendersystems ergeben sich aus der errechneten Entfernung r und dem Winkel ψ mit Hilfe der Winkelbeziehung Gleichung 2. Damit ist für den zweidimensionalen Fall (Sender und Empfängerpunkte in einer Ebene) das Lokalisierungsproblem gelöst.

Die Lösung des äquivalenten dreidimensionalen Problems führt statt zu Ortskurven (Gleichung 3) zu Ortsflächen, welche durch Rotation der entsprechenden Ortskurven um die Feldrichtung entstehen. Zwei Ortsflächen schneiden sich im allgemeinen in zwei Schnittlinien, drei Ortsflächen schneiden sich unter den gegebenen Voraussetzungen im allgemeinen in vier Punkten. Durch eine vierte rämliche Orientierung der Senderachse wird eine vierte Ortsfläche bestimmt, ihr Schnitt mit den übrigen drei ergibt die dem Empfängerstandort diametral gegenüberliegenden zwei möglichen Lösungen für den Senderstandort. Die Auswahl der physikalisch richtigen Lösung kann wie im zweidimensionalen Fall mit einer Amplitudendifferenzmessung erfolgen.

Zur Berechnung der Ortskoordinaten des Empfängerstandortes relativ zum Sender vereinfacht sich das dreidimensionale Problem auf zwei Dimensionen, da die Feldrichtung am Empfangsort stets in einer Meridianebene der jeweils aktiven Sendeantenne liegt. Diese Meridianebene ist durch die Senderachsenrichtung und die Richtung des Empfangsfeldes definiert. Zur Auswertung wird eine Koordinatentransformation vorgenommen, so daß die Lösungsverfahren für den beschriebenen ebenen Fall verwendet werden können.

In der Praxis ist es vorteilhaft, die schwierigen dreidimensionalen Berechnungen zu umgehen, indem die Rechenmethoden für den zweidimensionalen Fall durch geeignete Korrekturen auch auf Empfängerstandorte außerhalb der Bezugsebene auwendbar werden, die gemäß Fig. 5 vom Senderstandort as höchstens unter einem vom zulässigne Fehler abhängigen Höhen- (Tiefen-) Winkel θv gesehen werden. Für einen Ortungsfehler von z.B. 1.5% oder 1 Grad ist der zulässige Winkel 23 Grad bzw der Abstand z von der Bezugsebene maximal 40% der Distanz Sender-Empfänger. In diesen eingeschränkten räumlichen Bereich mit waagrechter Bezugsebene fallen aber die meisten der im Bergbau vorkommenden Meßsituationen, weshalb für die weitere Beschreibung auf diesen Fall Besug genommen wird.

Sender und Empfängersystem werden als waagrecht (parallel zur Bezugsebene) orientiert vorausgesetzt, zwischen Sender und Empfänger bestehe jedoch eine Höhendifferenz z. Für die Darstellung in Fig. 5 ist angenommen, daß der Empfangspunkt EA in einer vertikalen Meridianebene der Sendeantenne liegt, was im allgemeinen nicht exakt der Fall ist.

Für die drei waagrechten Orientierungen der Sendeantenne werden vorteilhafterweise, wie schon im zweidimensionalen Fall ausgeführt, die Winkel 0, 120 und 240 Grad verwendet, um eine symmetrische Verteilung des Feldes zu erreichen. Für die Berechnung der Ortskurven und deren Schnittpunkte wird die Höhendifferenz zunächst vernachlässigt und nur mit den waagrechten Komponenten der Feldrichtung gerechnet. Durch die Symmetrie der Senderorientierungen ist es in jedem Empfangspunkt möglich, zwei zum Radiusvektor angenähert spiegelbildliche Ortskurven zu wählen, deren Winkelfehler, hervorgerufen durch die Vernachlässigung der Höhendifferenz, sich im Schnittpunkt aufheben. Der so ermittelte Winkel ϕ gilt in der waagrechten Bezugsebene; der aus Gleichung 3 berechnete Radius r ist der räumliche Abstand zwischen Sender und Empfänger (vergl. Fig. 5).

Zur Bestimmung der Höhendifferenz z wird von den drei gemessenen Wertepaaren für Feldstärke und Feldrichtung dasjenige mit der größten Abweichung der Feldrichtung aus der waagrechten Ebene herangezogen. Mit Hilfe der allgemein gültigen Winkelbeziehung Gleichung 2 wird mit ε = θv + ψv der Erhebungswinkel θv und weiters mittels der Entfernung r- die Höhendifferenz z berechnet. Obwohl die zur Berechnung herangezogene Meridianebene im allgemeinen nicht exakt vertikal steht, bleibt der entstehende Fehler wegen der cos-Abhängigkeit unter den gegebenen Voraussetzungen innerhalb der Toleranzgrenze von 1,5%.

Für die Bestimmung des Winkels θ aus dem Winkel ψ analog zur Darstellung in Fig. 2 muß die Höhendifferenz durch Modifikation der Winkelbeziehung Gleichung 2 berücksichtigt werden und lautet dann

$$\tan \theta = G \cdot \tan \varphi \qquad (5)$$

$$\text{mit } G = Go \cdot \cos(\varepsilon \cdot 2/3)$$

ε ... größter Anstiegswinkel der gemessenen Feldstärke

Go = 2 ... Feldstärkeverhältnis in den zwei Gaußschen Hauptlagen

Aus den gerechneten Werten r, z, θ und ψ kann in bekannter Weise der Standort und die Orientierung des

Empfängersystems relativ zum Sendersystem bestimmt werden.

Die erfingungsgemäße Idee läßt sich auch zur Ortung eines Sendedipols verwenden, wenn das Feld des Sendedipols an zumindest drei verschiedenen, beispielsweise durch das oben beschriebene Verfahren bekannten Meßpunkten in Betrag und Richtung gemessen wird.

Im allgemeinen räumlichen Fall - beliebige Orientierung und Position des Sendedipols - erfolgt die Messung von Feldstärke und Feldrichtung vorzugsweise in mindestens vier geeignet gewählten Empfangspunkten. Zur Auswertung wird in jedem Empfangspunkt eine Ortsfläche möglicher Senderstandorte berechnet, welche sich durch Rotation der Ortskurve k (Figur 2), bestimmt durch die Gleichung (3) um die Achse H, bestimmt durch die gemessene Feldrichtung, ergibt. Der bzw. die gemeinsame(n) Schnittpunkt(e) aller vier Ortsflächen erlauben die Ermittlung der Senderposition.

Im vereinfachten zweidimensionalen Fall liegen sowohl die Empfangspunkte wie auch der Senderdipol in einer (häufig waagrechten) Bezugsebene, die Orientierung des Senderdipols ist weiterhin beliebig räumlich. Zur eindeutigen Bestimmung des Senderstandortes sind die Feldmessungen in drei geeignet gewählten Meßpunkten in der Bezugsebene erforderlich. In jedem Meßpunkt bestimmen Amplitude und Richtung des Feldes eine Ortsfläche möglicher Senderstandorte wie oben beschrieben. Zur Berechnung wird nur mehr die Schnittkurve der Ortsfläche mit der Bezugsebene verwendet, welche durch die folgende Gleichung bestimmt ist:

$$r(\varphi) = \frac{Ce}{\sqrt[3]{H_j \cdot \sqrt{(1 - 3\sin^2(\varphi - \alpha_j))}\cos\varepsilon_j)}}$$

mit

r(ϕ) ...Ortskurve der möglichen Senderpositionen in Polarkoordinaten des Empfängersystems im j-ten Meßpunkt,
Ce ... Maßstabsfaktor,
Hj ... Feldstärke im j-ten Meßpunkt,
αj ... Feldrichtung relativ zum Empfängersystem im j-ten Meßpunkt.
εj ... Neigungswinkel der j-ten Feldrichtung gegen die Bezugsebene.

Der gesuchte Senderstandort ergibt sich als gemeinsamer Schnittpunkt dreier Schnittkurven nach Gleichung (6). In Figur 6 ist die Auswertung eines praktischen Beispiels gezeigt. 1, 2 und 3 bezeichnen die Meßpunkte K(1), K(2) und K(3) die jeweils zugeordneten Schnittlinien der Ortsflächen mit der Bezugsebene, der Senderstandort S ist durch einen Kreis gekennzeichnet.

Steht die Achse des Senderdipols senkrecht zur Bezugsebene, so gilt in allen Meßpunkten εi=90°, die Schnittkurven Gleichung (6) entarten zu Kreisen. Für eine eindeutige Bestimmung des Sendestandortes dürfen die Meßpunke in diesem Fall nicht kollinear liegen (nicht auf einer Linie).

**Patentansprüche**

1. Ortungsverfahren zur Standortbestimmung von Empfangsantennen mittels elektromagnetischer NF-Signale im Nahfeldbereich einer ortsfesten Sendevorrichtung, dadurch gekennzeichnet, daß die Sendevorrichtung aus einer oder mehreren magnetischen Dipolantennen besteht und daß mittels der ortsfesten Sendevorrichtung Dipolfelder in verschiedenen Achsenrichtungen erzeugt werden und mittels einer Empfangsvorrichtung unbekannter Position und unbekannter Orientierung die Feldstärke (H) und die Feldrichtung (α) bezüglich des Empfängersystems für jede Senderorientierung gemessen wird, woraus gemäß dem Zusammenhang

$$r(\varphi) = \frac{Ce}{\sqrt[3]{H_j \cdot \sqrt{(1 + 3\sin^2(\varphi - \alpha_j))}}}$$

mit

r(ϕ) ... Ortskurve der möglichen Senderstandorte in Polarkoordinaten des Empfängersystems bei der j-ten Senderorientierung,
Ce ... Maßstabsfaktor,
Hj ... Empfangsfeldstärke bei der j-ten Senderorientierung,

$\alpha j$ ... Feldrichtung relativ zum Empfängersystem bei der j-ten Senderorientierung
– im zweidimensionalen, ebenen Fall, bei dem die einzelnen Empfangspositionen der Empfangsvorrichtung und die Achsenrichtungen der Sendeantennenstellungen in derselben Ebene Liegen - je eine Ortskurve (k) bzw.
– im allgemeinen dreidimensionalen Fall - eine daraus durch Rotation um den gemessenen Feldstärkenvektor hervorgehende Ortsfläche jener möglicher Senderstandorte berechnet wird, die bei der Empfangsvorrichtung die Feldstärke (Hj) in der Feldrichtung ($\alpha j$) erzeugen, wobei die gemeinsamen Schnittpunkte von mindestens drei Ortskurven (k, k2, k3) bzw. mindestens vier Ortsflächen ein Lösungspaar von zwei diametral gegenüberliegenden Senderpositionen (SA) und (SA') ergeben, woraus die relativen Koordinaten des Empfängerstandortes (EA) bezüglich des Senderstandortes ermittelt werden.

2. Ortungsverfahren nach Anspruch 1, dadurch gekennzeichnet, daß bei Verwendung nur einer Sendeantenne deren Achsenrichtung durch Drehen der Sendeantenne eingestellt wird.

3. Ortungsverfahren nach Anspruch 1, dadurch gekennzeichnet, daß bei Verwendung je einer Dipolantenne für die geforderten Achsenrichtungen deren Achsen fix in die erforderlichen Richtungen eingestellt werden und deren Anspeisung in einer solchen Weise erfolgt, daß am Empfangsort für jede Senderstellung getrennt die Feldstärke und Feldrichtung gemessen wird.

4. Ortungsverfahren nach Anspruch 1, dadurch gekennzeichnet, daß drei Senderachsenrichtungen in der Ebene, symmetrisch verteilt, bei 0, 120 und 240 Grad liegen.

5. Ortungsverfahren nach den Ansprüchen 1 und 4, dadurch gekennzeichnet, daß die drei Senderachsenrichtungen durch zwei mit ihren Achsen um 120 Grad zueinander geneigte Sendedipole gleichen Dipolmoments erzeugt werden, wobei zunächst jeweils eine der Sendeantennen gespeist wird, die damit die Winkelstellungen 0 Grad bzw. 120 Grad repräsentieren und zur Erzielung der dritten Senderachsenrichtung beide Sendedipole gemeinsam gespeist werden, so daß sich die Wirkung beider Sendedipole so addiert, daß die Feldstruktur gleich der eines Sendedipols, orientiert in der dritten Richtung, nämlich 240 Grad bzw. 60 Grad ist.

6. Ortungsverfahren nach Anspruch 1, dadurch gekennzeichnet, daß für vier geeignet räumlich orientierte Richtungen der Sendedipolachsen jeweils am Empfangsort Stärke und Richtung des Senderfeldes gemessen wird und aus dem Schnitt der für jede Senderorientierung berechneten Ortsflächen möglicher Senderpositionen ein Lösungspaar für die relative Position des Sendersystems bezüglich des Empfängersystems gerechnet wird, woraus die relativen Koordinaten des Empfängerstandortes bezüglich des Senderstandortes ermittelt werden.

7. Ortungsverfahren nach einem der Ansprüche 1 bis 6, dadurch gekennzeichnet, daß bei Verschiebung des Empfängerstandpunktes in Richtung zum Sender bzw. weg vom Sender aus einer entsprechenden Feldstärkezunahme bzw. Feldstärkeabnahme ein Entscheidungsmerkmal für die Bestimmung des tatsächlishen Senderstandortes aus den gerechneten Lösungspaaren (SA) und (SA'), welche dem Empfängerstandort diametral gegenüberstehen, gewonnen wird.

8. Ortungsverfahren zur Standortbestimmung einer beliebig orientierten und beliebig positionierten Dipolantenne mittels elektromagnetischer NF-Signale im Nahfeld, dadurch gekennzeichnet, daß das von dieser Dipolantenne erzeugte Feld in mindestens drei vorzugsweise mindestens vier geeignet gewählten lagenmäßig bekannten Empfangspunkten nach Stärke und Richtung gemessen wird, woraus im Empfängersystem für jeden Meßpunkt eine durch Rotation der Ortskurve $r(\phi)$

$$r(\varphi) = \frac{Ce}{\sqrt[3]{H_j \cdot \sqrt{(1 + 3\sin^2(\varphi - \alpha_j))}}}$$

mit

$r(\phi)$ ... Ortskurve der möglichen Senderpositionen in Polarkoordinaten des Empfängersystems in j-ten Meßpunkt,
Ce ... Maßstabsfaktor,
Hj ... Feldstärke im j-ten Meßpunkt,
$\alpha j$ ... Feldrichtung relativ zum Empfängersystem im j-ten Meßpunkt

um den gemessenen Fekdstärkenvektor hervorgende Orstsfläche möglicher Senderstandpositionnen berechnet und aus dem (den) Schnittpunkt(en) der zu den einzelnen Empfangspunkten gehörigen Ortsflächen der Senderstandort ermittelt wird.

9. Ortungsverfahren nach Anspruch 8, dadurch gekennzeichnet, daß im vereinfachten zweidimensionalen Fall, bei dem der Standort des beliebig räumlich orientierten Senderdipols sowie die Empfangspunkte in einer bekannten Bezugsebene liegen und aus den gemessenen Feldstärken und Feldrichtungen in mindestens drei geeignet gewählten Empfangspunkten (1,2,3) die Schnittkurven (K(1) K(2), K(3)) der Ortsflächen mit der

Bezugsebene gemäß dem Zusammenhang

$$r(\varphi) = \frac{Ce}{\sqrt[3]{H_j \cdot \sqrt{(1 + 3\sin^2(\varphi - \alpha_j))} \cos \varepsilon_j}}$$

mit

$\varepsilon j$ ... Neigungswinkel der j-ten Feldrichtung gegen die Bezugsebene

berechnet werden, deren gemeinsamer Schnittpunkt (S) die Senderposition bestimmt.

**Claims**

1. An orientation method for determining the location of receiving antennae by means of electromagnetic low frequency signals in the near field range of a fixed transmitting apparatus, characterised in that the transmitting apparatus consists of one or a plurality of magnetic dipole antennae and in that by means of the fixed transmitting apparatus dipole fields in various axial directions are generated and by means of a receiving apparatus of unknown position and unknown orientation the field strength (H) and field direction ($\alpha$) in respect of the receiving system is measured for each transmitter orientation so that in accordance with the equation

$$r(\varphi) = \frac{Ce}{\sqrt{H_j \sqrt{. (1 - 3\sin^2(\varphi - \alpha_j))}}}$$

in which

$r(\phi)$ ... location curve of the possible transmitter sites in polar co-ordinates of the receiving system for the jth transmitter orientation,

Ce ... scale factor,

Hj ... reception field strength for the jth transmitter orientation

$\alpha j$ ... field direction relative to the receiving system for the jth transmitter orientation

– in the two-dimensional level situation where the individual receiver positions of the receiving apparatus and the axial directions of the transmitting antennae positions are in the same plane

– a respective location curve (k) or - in the general three-dimensional case - a location surface arising from rotation thereof about the measured field strength vector is calculated for all possible transmitter locations, which generate at the receiving apparatus the field strength (Hj) in the field direction ($\alpha$j), the common points of intersection of at least three location curves (k, K2, k3) or at least four location surfaces providing a solution pair of two diametrically opposed transmitter positions (SA) and (SA'), from which the relative coordinates of the receiver location (EA) with respect to the transmitter location are ascertained.

2. An orientation method according to claim 1, characterised in that when only one transmitting antenna is used, its axial direction is adjusted by rotation of the transmitting antenna.

3. An orientation method according to claim 1, characterised in that when a dipole antenna is used for each of the axial directions required their axes are rigidly set in the necessary directions and they are fed in such a way that the field strength and field direction are measured separately for each transmitter position at the reception site.

4. An orientation method according to claim 1, characterised in that three transmitter axis directions are symmetrically distributed in the plane, at 0, 120 and 140°.

5. An orientation method according to claims 1 and 4, characterised in that the three transmitter axis directions are created by two transmitting dipoles of equal dipole moment which have their axes inclined at 120° to each other, a respective one of the transmitting antennae being initially fed for representing the angular positions 0° and 120°, both transmitting dipoles being fed jointly to obtain the third transmitter axis direction, so that the action of both transmitting dipoles is so totalled that the field structure is equal to that of one transmitting dipole orientated in the third direction, namely 240° or 60°.

6. An orientation method according to claim 1, characterised in that for four suitably spatially orientated directions of the transmitting dipole axes, strength and direction of the transmitter field are in each case measured at the reception site and in that from the intersection of the location surface of possible transmitter

positions calculated for each transmitter orientation a solution pair is calculated for the relative position of the transmitter system in relation to the reception system, from which the relative co-ordinates of the receiver location in relation to the transmitter location are ascertained.

7. An orientation method according to one of claims 1 to 6, characterised in that with a displacement of the receiver location in the direction of the transmitter or away from the transmitter, a decision feature for determining the actual transmitter location is obtained from a corresponding increase or decrease in field strength to determine the actual transmitter location from the calculated solution pairs (SA) and (SA') which are diametrically opposite the receiver location.

8. An orientation method for determining the location of a dipole antenna orientated and positioned at will, by means of electromagnetic low frequency signals in the near field, characterised in that the field generated by this dipole antenna is measured in at least three and preferably at least four suitable selected known-location reception points in terms of strength and direction, from which in the receiver system for each point of measurement a location surface of possible transmitter sites arising out of the measured field strength vector by rotation of the location curve r(ϕ)

$$r(\varphi) = \frac{Ce}{\sqrt[3]{H_j \cdot \sqrt{(1 + 3\sin^2(\varphi - \alpha_j))}}}$$

in which

r(ϕ) ... location curve of the possible transmitter positions in polar co-ordinates of the receiver system at the jth point of measurement,

Ce ... scale factor,

Hj ...field strength at the jth point of measurement,

αj ... field direction in relation to the receiver system at the jth point of measurement

is calculated and the transmitter position is ascertained from the point (s) of intersection of the location surfaces of relative to the individual reception points.

9. An orientation method according to claim 8, characterised in that in the simplified two-dimensional situation in which the location of the transmitter dipole spatially orientated as desired and the reception points lie in one known reference plane and in that from the measured field strength and field directions in at least three suitable selected reception points (1, 2, 3) the intersecting curves (K(1), K(2), K(3)) of the location surfaces with the reference plane according to the equation

$$r(\varphi) = \frac{Ce}{\sqrt[3]{H_j \cdot \sqrt{(1 + 3\sin^2(\varphi - \alpha_j))\cos \varepsilon_j}}}$$

in which

εj ... is the angle of inclination of the jth field direction in relation to the reference plane

are calculated, their common point of intersection (S) determining the location of the transmitter.

## Revendications

1. Procédé de repérage pour localiser des antennes réceptrices à l'aide de signaux électromagnétiques basse fréquence dans la zone de champ proche d'un dispositif émetteur fixe, caractérisé en ce que le dispositif émetteur se compose d'une ou de plusieurs antennes dipôles magnétiques, et en ce que, grâce au dispositif émetteur fixe, des champs dipôles sont produits selon différentes directions d'axe et, grâce à un dispositif récepteur de position inconnue et d'orientation inconnue, l'intensité de champ (H) et la direction de champ (α) sont mesurées, pour chaque orientation de l'émetteur, par rapport au système récepteur, à partir de quoi, conformément à la relation

$$r(\phi) = \frac{Ce}{\sqrt[3]{H_j \cdot \sqrt{(1 + 3\sin^2(\phi - \alpha_j))}}}$$

dans laquelle

r(ϕ) ...désigne le lieu géométrique des emplacements possibles de l'émetteur dans les coordonnées polaires du système récepteur pour la jième orientation de l'émetteur,

Ce ...désigne le facteur d'échelle,

Hj ...désigne l'intensité de champ du récepteur pour la jième orientation,

αj ...désigne la direction du champ par rapport au système récepteur pour la jième orientation de l'émetteur

– dans le cas bidimensionnel plan, dans lequel les différentes positions de réception du dispositif récepteur et les directions d'axe des positions d'antennes émettrices se trouvent dans le même plan, un lieu géométrique (k), ou

– dans le cas tridimensionnel général, une surface de localisation, qui en résulte par rotation autour du vecteur d'intensité de champ mesuré, des emplacements d'émetteurs possibles qui produisent l'intensité de champ (Hj) dans la direction du champ (αj) au niveau du dispositif récepteur, est chaque fois calculé, les points d'intersection communs d'au moins trois lieux géométriques (k, k2, k3) ou d'au moins quatre surfaces de localisation donnant un couple de résolution formé de deux positions d'émetteurs (SA) et (SA') diamétralement opposées à partir desquelles sont calculées les coordonnées relatives de l'emplacement (EA) du récepteur par rapport à l'emplacement de l'émetteur.

2. Procédé de repérage selon la revendication 1, caractérisé en ce que, dans le cas de l'utilisation d'une seule antenne émettrice, la direction d'axe de celle-ci est réglée par une rotation de l'antenne émettrice.

3. Procédé de repérage selon la revendication 1, caractérisé en ce que, dans le cas de l'utilisation d'antennes dipôles respectives pour les directions d'axe requises, les axes de celles-ci sont positionnés de façon fixe dans les directions voulues et leur alimentation se fait de telle sorte qu'au lieu d'émission, l'intensité et la direction de champ soient mesurées séparément pour chaque position de l'émetteur.

4. Procédé de repérage selon la revendication 1, caractérisé en ce que trois directions d'axe d'émetteur se trouvent dans le plan, réparties de façon symétrique, à 0, 120 et 240 degrés.

5. Procédé de repérage selon les revendications 1 et 4, caractérisé en ce que les trois directions d'axe d'émetteur sont produites par deux dipôles émetteurs de même moment de dipôle et dont les axes sont inclinés l'un par rapport à l'autre de 120 degrés, l'une des antennes émettrices étant chaque fois alimentée en premier, représentant ainsi les positions angulaires 0 degré ou 120 degrés, et les deux dipôles émetteurs étant alimentés en commun, pour l'obtention de la troisième direction d'axe d'émetteur, de sorte que l'action des deux dipôles émetteurs s'additionne pour que la structure de champ soit égale à celle d'un dipôle émetteur, orienté suivant la troisième direction, à savoir 240 degrés ou 60 degrés.

6. Procédé de repérage selon la revendication 1, caractérisé en ce que pour quatre directions des axes de dipôles émetteurs, orientées de façon appropriée dans l'espace, l'intensité et la direction du champ d'émetteur sont mesurées à chaque fois au lieu de réception et, à partir de l'intersection des surfaces de localisation de positions d'émetteur possibles, calculées pour chaque orientation d'émetteur, un couple de résolution est calculé pour la position relative du système d'émetteur par rapport au système de récepteur, ce qui permet de déterminer les coordonnées relatives de l'emplacement du récepteur par rapport à celui de l'émetteur.

7. Procédé de repérage selon l'une des revendications 1 à 6, caractérisé en ce que, dans le cas d'un déplacement du point d'installation du récepteur le rapprochant ou l'éloignant de l'émetteur, l'augmentation, respectivement la diminution, de l'intensité de champ correspondante fournit une caractéristique de décision pour déterminer l'emplacement réel de l'émetteur à partir des couples de résolution (SA) et (SA') calculés, qui sont diamétralement opposés de part et d'autre de l'emplacement du récepteur.

8. Procédé de repérage pour localiser une antenne dipôle orientée et positionnée d'une façon quelconque, à l'aide de signaux électromagnétique basse fréquence dans la zone de champ proche, caractérisé en ce que l'intensité et la direction du champ produit par cette antenne dipôle sont mesurées en au moins trois, et de préférence au moins quatre, points de réception convenablement sélectionnés et dont l'emplacement est connu, à partir desquels, pour chaque point de mesure dans le système récepteur, une surface de localisation des positions possibles d'émetteur, résultant d'une rotation du lieu géométrique (ϕ)

$$r(\varphi) = \frac{Ce}{\sqrt[3]{H_j \cdot \sqrt{(1 + 3\sin^2(\varphi - \alpha_j))}}}$$

dans laquelle

r(ϕ) ...,désigne le lieu géométrique des emplacements possibles de l'émetteur dans les coordonnées polaires du système récepteur au jième point de mesure,

Ce ...désigne le facteur d'échelle,

Hj ...désigne l'intensité de champ au jième point de mesure,

αj ...désigne la direction du champ par rapport au système récepteur au jième point de mesure

autour du vecteur de champ mesuré est calculée, et à partir du point d'intersection (des points d'intersection) des surfaces de localisation correspondant aux différents points de réception, l'emplacement de l'émetteur est déterminé.

9. Procédé de repérage selon la revendication 8, caractérisé en ce que, dans le cas bidimensionel simplifié, dans lequel l'emplacement du dipôle émetteur orienté d'une façon quelconque dans l'espace et les points de réception se trouvent dans un plan de référence connu et, à partir des intensités et directions de champ mesurées en au moins trois points de réception (1, 2, 3) convenablement sélectionnés, les courbes d'intersection (k(1), k(2), k(3)) des surfaces de localisation avec le plan de référence sont calculées suivant la relation

$$r(\varphi) = \frac{Ce}{\sqrt[3]{H_j \cdot \sqrt{(1 + 3\sin^2(\varphi - \alpha_j))} \cos \varepsilon_j}}$$

dans laquelle

εj ... désigne l'angle d'inclinaison de la jième direction de champ par rapport au plan de référence,

le point d'intersection commun (S) desdites courbes définissant la position d'émetteur.

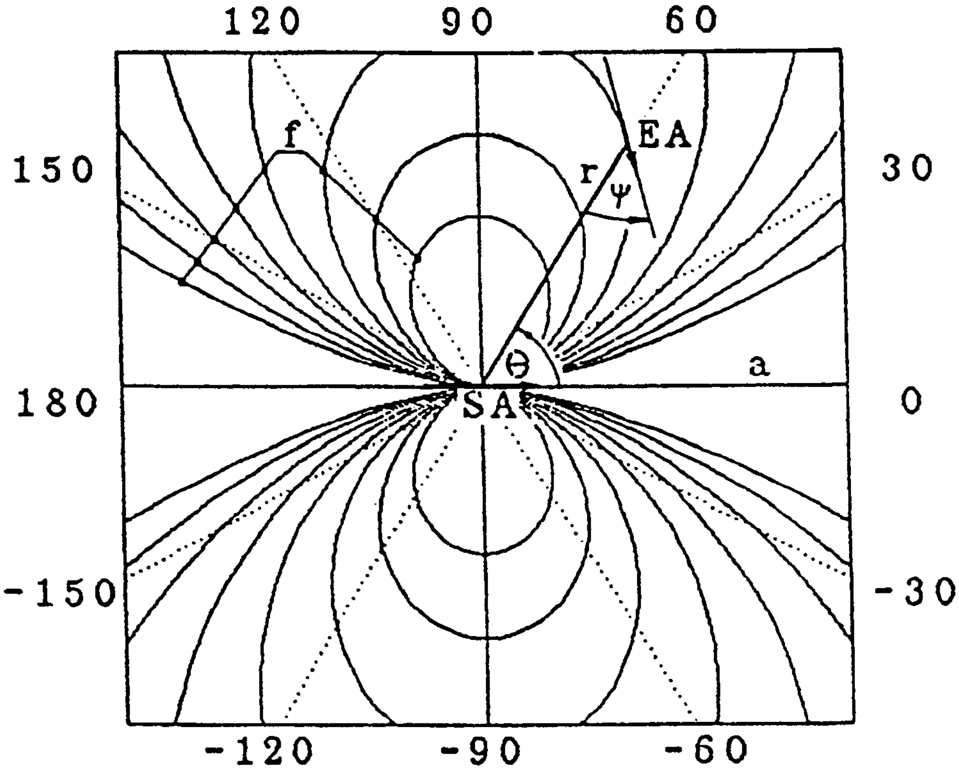


Figur 1

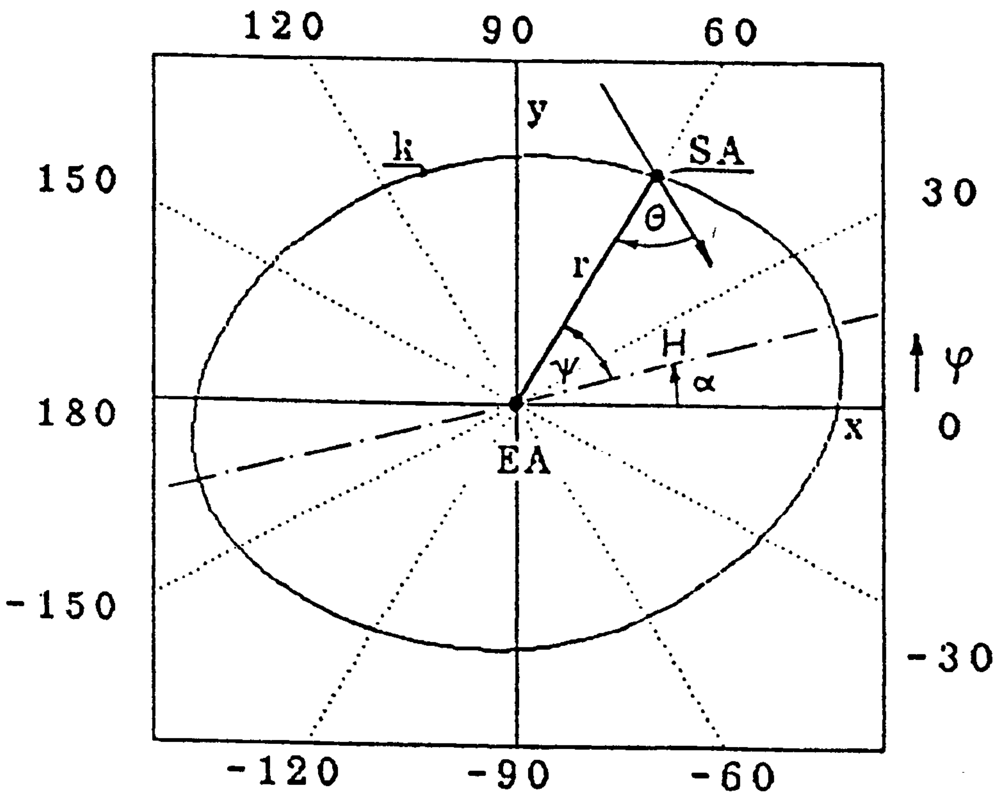


Figur 2

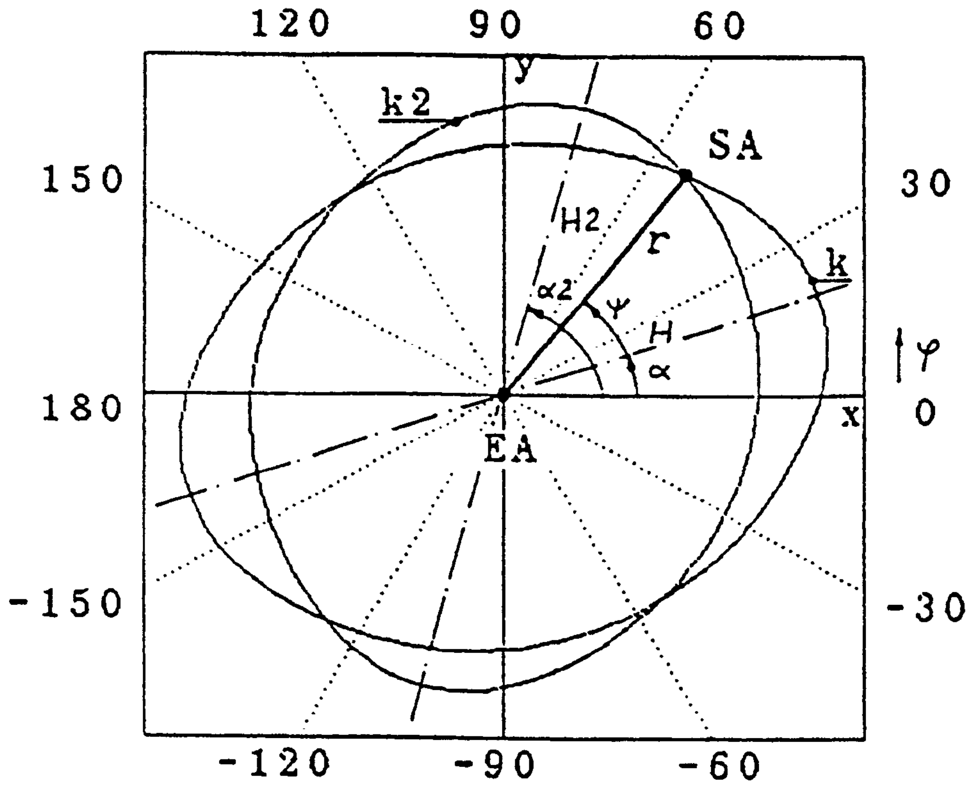


Figur 3

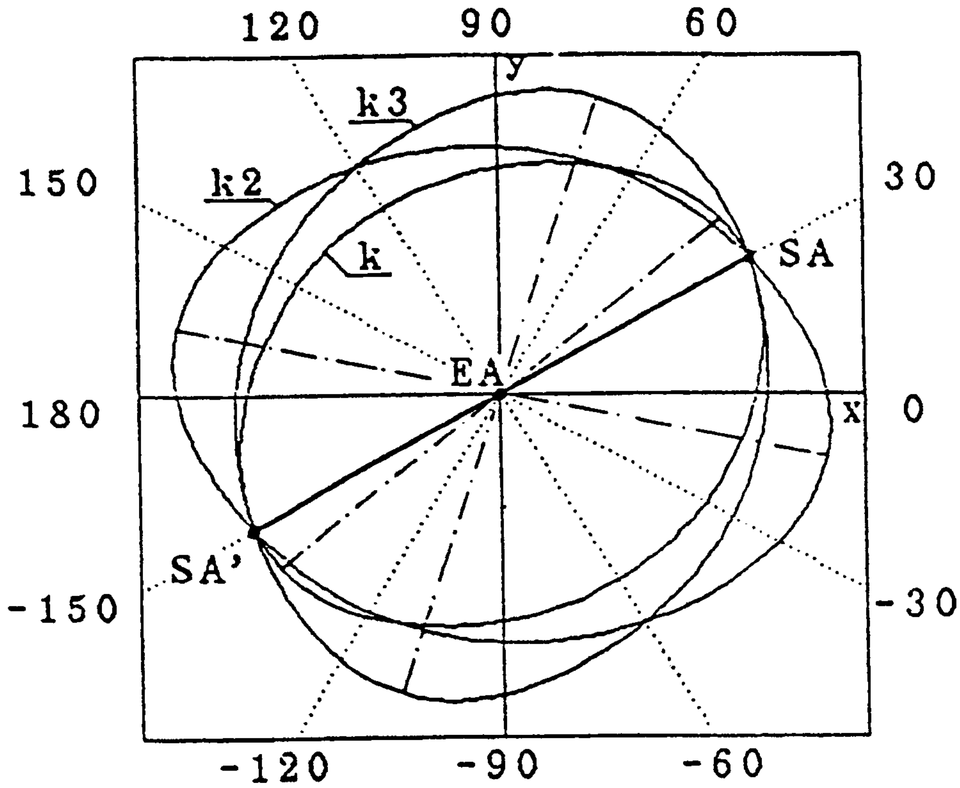


Figur 4

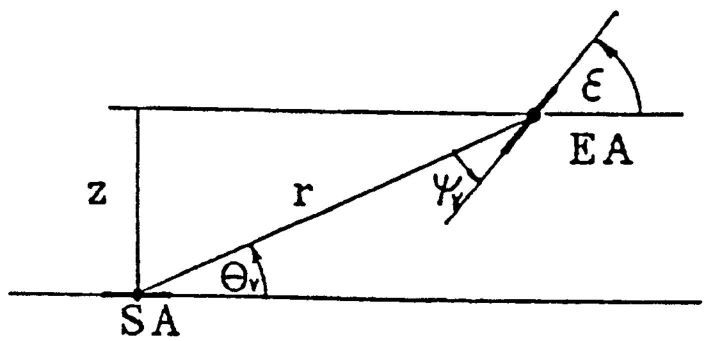


Figur 5

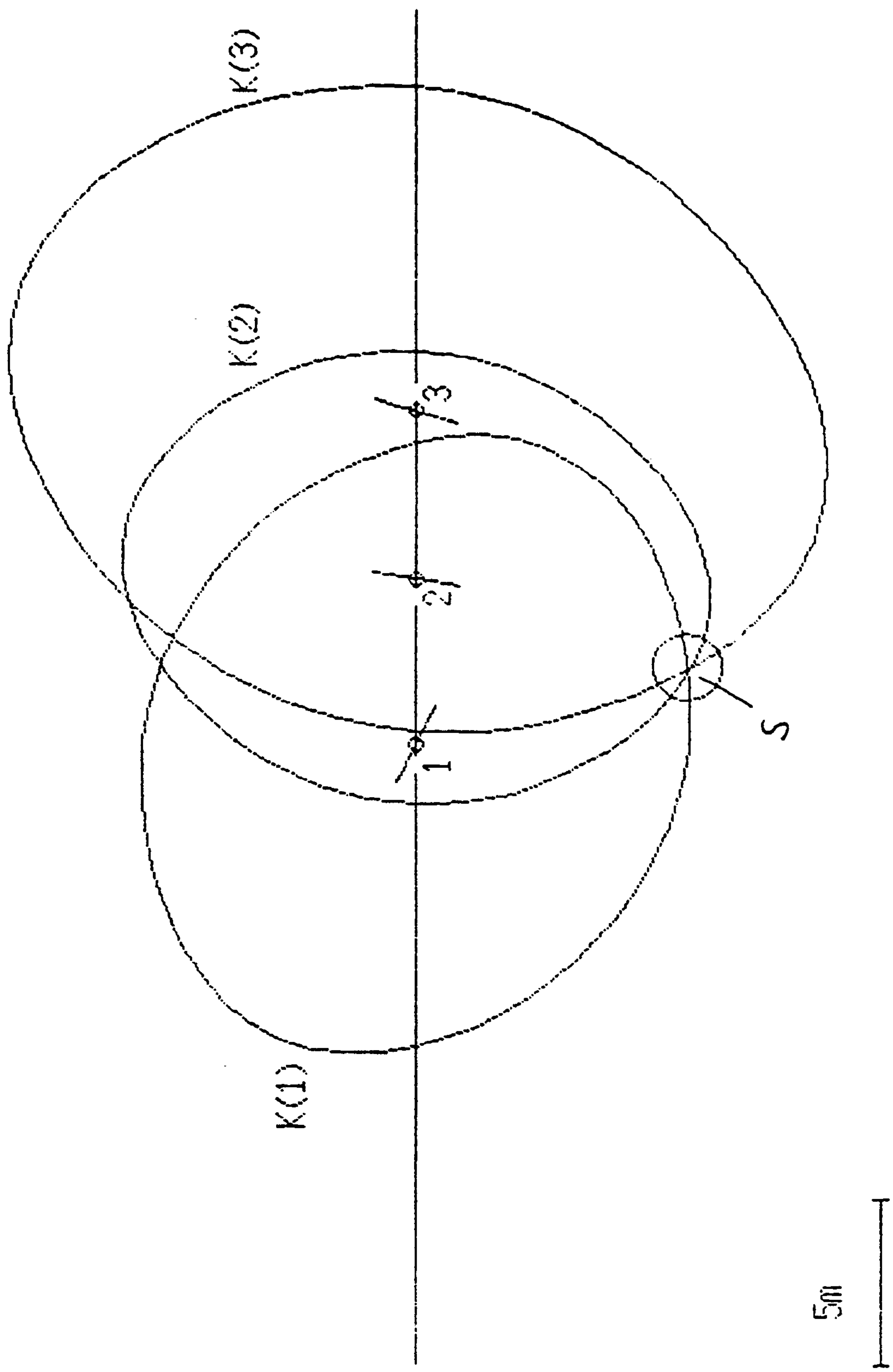


FIG. 6